# EUROPEAN PATENT APPLICATION

(11) **EP 2 854 147 A1**
(43) Date of publication of application: **01.04.2015**
(21) Application number: 13186748.3
(22) Date of filing: 30.09.2013
(51) Int. Cl.: H01G 11/54, H01M 10/0525, H01M 10/0567, H01M 10/0568, H01M 10/0569

(54) **Electrolyte compositions comprising fluorinated carbonates**

(71) Applicant: Solvay SA, 1120 Bruxelles (BE)
(72) Inventor: Kim, Hag-Soo, 689-903 Ulsan (KR)
(74) Representative: Mross, Stefan P.M.

(57) **Abstract**

The present invention concerns electrolyte compositions comprising fluorinated carbonates, more specifically electrolyte compositions comprising lithium hexafluorophosphate (LiPF6) and a mixture of a cyclic carbonate and an acyclic carbonate, as well as their use as solvent or solvent additive for lithium ion batteries and supercapacitors.

## Description

The present invention concerns electrolyte compositions comprising fluorinated carbonates, more specifically electrolyte compositions comprising lithium hexafluorophosphate (LiPF₆) and a mixture of cyclic carbonates and acyclic carbonates, as well as lithium ion batteries, lithium air batteries, lithium sulfur batteries, supercapacitors or hybrid supercapacitors comprising said electrolyte compositions.

Lithium ion batteries, lithium air batteries and lithium sulfur batteries are well-known rechargeable means for storing electric energy. Lithium ion batteries comprise an electrolyte composition containing a solvent composition and a conductive salt like LiPF₆. The solvent composition serves to dissolve the conductive salt.

Capacitors are widely used devices for storing electrical energy. Amongst the various types of capacitors are electrochemical capacitors and electrolytic capacitors.

A hybrid supercapacitor is an electrochemical energy storage device that employs two different electrode types, the difference between the electrodes generally being in capacity or composition, and an electrolyte composition.

The optimization of the electrolyte compositions in hybrid supercapacitors still offers a significant potential to improve the performance properties of such systems.

High-voltage lithium ion batteries comprising a nickel-manganese-oxide (NMO) cathode with a voltage of around 5.0 V or a nickel-cobalt-manganese-oxide (NMC) cathode with a voltage of around 4.7 V have been developed to meet the increasing demand of high energy density. However, the solvents and solvent mixtures used for the electrolytes in conventional lithium ion batteries are generally not sufficiently stable for the use in high-voltage lithium batteries.

Now therefore, the invention makes available improved electrolyte compositions. One objective of the present invention is to provide electrolyte compositions with increased stability. A further objective is to provide electrolyte compositions that improve the properties of lithium ion batteries, especially for high-voltage lithium ion batteries, e.g. by extending their cycle life. The electrolyte compositions of the present invention provide advantages like modifying the viscosity or reducing the flammability. Another advantage is the modification of the electrodes under formation of beneficial films. Furthermore, the electrolyte compositions of the invention advantageously lead to a better wettability of materials used in lithium ion batteries such as in particular a separator. The electrolyte compositions of the invention can suitably assist in the protection against over-charging, for example, by serving as a redox shuttle.

Additionally, the electrolyte compositions of the present invention may increase energy density of a supercapacitor, their power density or their cycle life.

Accordingly, one aspect of the invention concerns an electrolyte composition comprising LiPF₆ as a conductive salt and a solvent composition consisting essentially of at least one acyclic carbonate of general formula (I): 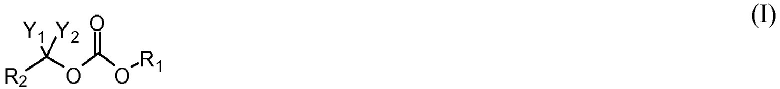 wherein R₁ is an optionally substituted alkyl, cycloalkyl, aryl or heteroaryl; R₂ is F or a fluorinated alkyl; and Y₁ and Y₂ are independently selected from H and F;
and at least one cyclic carbonate of general formula (II): 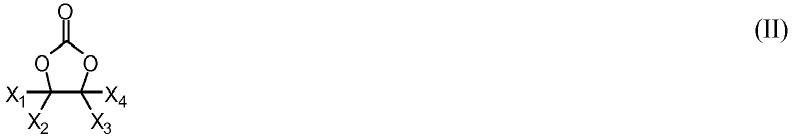 wherein X₁, X₂, X₃ and X₄ are independently selected from the group consisting of H, F, CH₂F, CHF₂, and CF₃, with the proviso that not all X₁, X₂, X₃ and X₄ are H.

In a preferred embodiment, R₁ is alkyl, more preferably R₁ is methyl or ethyl, most preferably R₁ is methyl. In another preferred embodiment, Y₁ and Y₂ are H and R₂ is F or CF₃, preferably Y₁ and Y₂ are H and R₂ is F. Also preferably, X₂, X₃ and X₄ are H and X₁ is F or CF₃, more preferably X₂, X₃ and X₄ are H and X₁ is F. Specifically, R₁ is methyl, Y₁ and Y₂ are H and R₂ is F, and X₂, X₃ and X₄ are H and X₁ is F.

The term "alkyl group" is intended to denote an optionally substituted chain of saturated hydrocarbon-based groups, such as, in particular, a C1-C6 alkyl. By way of example, mention may be made of methyl, ethyl, propyl, isopropyl, butyl, t-butyl, pentyl, isopentyl and hexyl. The alkyl may be optionally substituted, e.g. with halogen, aryl, or heteroaryl.

The term "cycloalkyl group" is intended to denote an optionally substituted cycle of saturated hydrocarbon-based groups. By way of example, mention may be made of cyclopropyl, cyclobutyl, cyclopentyl, and cyclohexyl. The cycloalkyl may be optionally substituted, e.g. with halogen, aryl, or heteroaryl.

The term "aryl" is intended to denote a group that are derived from an aromatic nucleus such as, in particular, a C6-C10 aromatic nucleus, in particular phenyl or naphthyl.

The term "heteroaryl" is intended to denote a group that are derived from an aromatic nucleus wherein at least one atom in the nucleus is a heteroatom ; preferably the at least one heteroatom is O, S, or N. Specific examples of heteroaryl groups are thiophene, furan, triazole, pyrazole, pyridine, pyrimidine, oxazole, thiazole, and isoxazole.

Cyclic carbonates can be prepared by methods well-known in the art, e.g. as described in WO 2004/076439. Acyclic carbonates can be prepared by methods well-known in the art, e.g. as described in JP 2004/010491.

The term "consists essentially of' is intended to denote a composition consisting only of the components specified. However, further components, e.g. impurities, might be present in the composition, generally in trace amounts, without changing the essential characteristics of the composition.

In another preferred embodiment, the electrolyte composition consists essentially of conductive salt and the solvent composition consisting essentially of an acyclic carbonate and a cyclic carbonate.

However, further components might additionally be present in the inventive electrolyte compositions. Thus, in another preferred embodiment the conductive salt and the solvent composition consisting essentially of at least one acyclic carbonate and at least one cyclic carbonate constitute > 75 wt% of the total electrolyte composition, preferably > 90 wt% of the total electrolyte composition, more preferably > 95 wt% of the total electrolyte composition.

In yet another preferred embodiment, the electrolyte composition comprises a further solvent suitable for lithium ion batteries, more preferably a further cyclic carbonate. Suitable further solvents suitable for lithium ion batteries include lactones, formamides, pyrrolidinones, oxazolidinones, nitroalkanes, N,N-substituted urethanes, sulfolane, dialkyl sulfoxides, dialkyl sulfites, acetates, nitriles, acetamides, glycol ethers, dioxolanes, dialkyloxyethanes, trifluoroacetamides. Suitable cyclic carbonates include cyclic alkylene carbonates, e.g. ethylene carbonate, propylene carbonate, and vinylidene carbonate. A preferred further cyclic carbonate is propylene carbonate.

In still another preferred embodiment, the electrolyte composition comprises a further acyclic carbonate. Suitable further acyclic carbonates include dimethyl carbonate, diethyl carbonate, and ethylmethyl carbonate. A preferred further acyclic carbonate is dimethyl carbonate.

In still another preferred embodiment, the electrolyte composition comprises the cyclic carbonate and the acyclic carbonate in a ratio from 1:10 to 1:1 by weight, preferably from 1:5 to 1:3 by weight, more preferably around 1:4 by weight. In yet another preferred embodiment, the electrolyte composition comprises the cyclic carbonate and the acyclic carbonate in a ratio from 1:10 to 1:1 by volume, preferably from 1:5 to 1:3 by volume, more preferably around 1:4 by volume. Electrolyte compositions comprising a solvent composition consisting essentially of one cyclic carbonate of formula (I) and two acyclic carbonates of formula (II) are also preferred. Furthermore, electrolyte compositions comprising a solvent composition consisting essentially of two cyclic carbonates of formula (I) and one acyclic carbonate of formula (II) are preferred. One example of a suitable mixture is a mixture of mono fluoroethylene carbonate, monofluoromethyl methyl carbonate and bis(monofluoromethyl) carbonate. Another example of a suitable mixture is a mixture of monofluoroethylene carbonate, trifluoroethylene carbonate and monofluoromethyl methyl carbonate carbonate.

The concentration of the conductive salt is preferably between 0.8 and 1.2 molar, more preferably 1.0 molar. In another preferred embodiment, the electrolyte composition may comprise a mixture of LiPF₆ and LiPO₂F₂ as the conductive salt. In that case, the concentration of LiPO₂F₂ in the electrolyte composition preferably is equal to or greater than 0.1 wt%, more preferably equal to or greater than 0.5 wt%; also preferably, the concentration is equal to or lower than 5 wt%.

Another aspect of the invention concerns a lithium battery, preferably a lithium ion battery, lithium air battery, lithium sulfur battery, supercapacitor or hybrid supercapacitor comprising the inventive electrolyte compositions. Preferred are lithium ion batteries, more preferably, high-voltage lithium ion batteries comprising a lithium-nickel-manganese-oxide cathode. Additionally, the lithium ion batteries advantageously comprise an anode, preferably an anode made from carbon comprising a copper foil, and a separator, preferably a separator made from an insulating polymer.

Still another aspect of the invention concerns the use of the inventive electrolyte compositions for high-voltage lithium ion batteries.

The term "high-voltage lithium ion batteries" is intended to denote lithium ion batteries with a voltage of > 4.6 V, preferably > 4.9 V.

Should the disclosure of any patents, patent applications, and publications which are incorporated herein by reference conflict with the description of the present application to the extent that it may render a term unclear, the present description shall take precedence.

The invention will now be further described in examples without intending to limit it.

### Examples:

### Abbreviations:

F1EC = monofluoroethylene carbonate
F1-DMC = monofluoromethyl methyl carbonate
F1,1-DMC = bis(monofluoromethyl) carbonate
F1-EMC = 1-fluoroethyl methyl carbonate
DMC = dimethyl carbonate
PC = propylene carbonate
LiPOF = LiPO₂F₂

### Example 1: Manufacture of the electrolyte compositions

| Compositions | Solvent mixture, ratio by weight [balance to 100 wt%] | LiPF₆ [mol/l] | Further component; amount [wt%] |
|---|---|---|---|
| Inventive composition 1 | F1EC/F1-DMC 1:4 | 1 | ---- |
| Inventive composition 2 | F1EC/F1,1-DMC 1:4 | 1 | ---- |
| Inventive composition 3 | F1EC/F1-DMC/ F1,1-DMC 1:2:2 | 1 | ---- |
| Inventive composition 4 | F1EC/F1-DMC 1:4 | 1 | LiPOF [1 wt%] |
| Inventive composition 5 | F1EC/F1-DMC 1:4 | 1 | PC [10 wt%] |
| Inventive composition 6 | F1EC/F1-DMC 1:4 | 1 | DMC [5 wt%] |
| Comparative Composition 1 | F1EC/F1-EMC 1:4 | 1 | ---- |

The electrolyte compositions are prepared by mixing appropriate amounts of the components of the solvent mixture, the conductive salt LiPF6 and further components if applicable in a vessel which is dried beforehand and through which dry N₂ is passed to provide an atmosphere which is dry and free of oxygen.

Comparative composition 1 was found not to be a stable composition. Upon mixing of the components, discoloration of the mixture was observed. Surprisingly, the inventive compositions 1 to 6 did not show discoloration. On the contrary, these mixtures lead to stable electrolyte compositions that can be stored under appropriate conditions without decomposition of any of its components.

## Claims

1. An electrolyte composition comprising LiPF₆ as a conductive salt and a solvent composition consisting essentially of at least one acyclic carbonate of general formula (I): 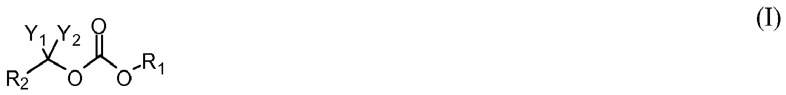 wherein R₁ is an optionally substituted alkyl, cycloalkyl, aryl or heteroaryl; R₂ is F or a fluorinated alkyl; and Y₁ and Y₂ are independently selected from H and F;
and at least one cyclic carbonate of general formula (II): 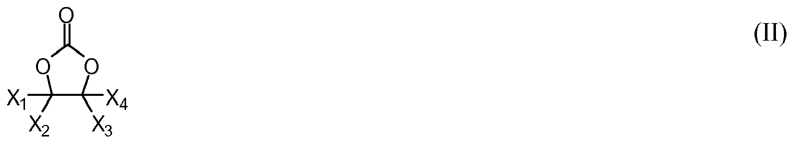 wherein X₁, X₂, X₃ and X₄ are independently selected from the group consisting of H, F, CH₂F, CHF₂, and CF₃, with the proviso that not all X₁, X₂, X₃ and X₄ are H.

2. The electrolyte composition according to claim 1 wherein R₁ is alkyl, preferably R₁ is methyl or ethyl, more preferably R₁ is methyl.

3. The electrolyte composition according to claim 1 or 2 wherein Y₁ and Y₂ are H and wherein R₂ is F or CF₃, preferably Y₁ and Y₂ are H and R₂ is F.

4. The electrolyte composition according to any one of claims 1 to 3 wherein X₂, X₃ and X₄ are H and X₁ is F or CF₃, preferably X₂, X₃ and X₄ are H and X₁ is F.

5. The electrolyte composition according to claim 1 wherein R₁ is methyl, Y₁ and Y₂ are H and R₂ is F, and wherein X₂, X₃ and X₄ are H and X₁ is F.

6. The electrolyte composition according to any one of claims 1 to 6 wherein the conductive salt and the solvent composition consisting essentially of an acyclic carbonate and a cyclic carbonate constitute > 75 wt% of the total electrolyte composition, preferably > 90 wt% of the total electrolyte composition, more preferably > 95 wt% of the total electrolyte composition.

7. The electrolyte composition according claim 6 consisting essentially of conductive salt and the solvent composition consisting essentially of an acyclic carbonate and a cyclic carbonate.

8. The electrolyte composition according to any one of claims 1 to 6 comprising a further solvent suitable for lithium ion batteries, preferably a further cyclic carbonate.

9. The electrolyte composition according to claim 8 wherein the further cyclic carbonate is propylene carbonate.

10. The electrolyte composition according to any one of claims 1 to 6 comprising a further acyclic carbonate.

11. The electrolyte composition according to claim 10 wherein the further acyclic carbonate is dimethyl carbonate.

12. The electrolyte composition according to any one of claims 1 to 11 wherein the ratio of cyclic carbonate to acyclic carbonate is from 1:10 to 1:1 by weight, preferably from 1:5 to 1:3 by weight, more preferably around 1:4 by weight.

13. The electrolyte composition according to any one of claims 1 to 12 comprising a mixture of LiPF₆ and LiPO₂F₂ as the conductive salt.

14. A lithium ion battery, lithium air battery, lithium sulfur battery, supercapacitor or hybrid supercapacitor comprising the electrolyte composition according to any one of claims 1 to 12.

15. Use of the electrolyte composition according to any one of claim 1 to 13 in a high-voltage lithium ion battery with a voltage > 4.6 V, preferably > 4.9 V.
